# EUROPEAN PATENT APPLICATION

(11) **EP 1 624 415 A2**
(43) Date of publication of application: **08.02.2006**
(21) Application number: 05254918.5
(22) Date of filing: 05.08.2005
(51) Int. Cl.: G06T 11/00, G06K 15/00, G06F 3/12

(54) **Image processing apparatus and its method**

(30) Priority: 06.08.2004 JP 2004231439
(71) Applicant: CANON KABUSHIKI KAISHA, Tokyo (JP)
(72) Inventor: Amano, Hiroyuki Canon Kabushiki Kaisha, Tokyo (JP)
(74) Representative: Beresford, Keith Denis Lewis

(57) **Abstract**

When a trapping process is applied to data which are subdivided upon conversion from application data into PDL data or conversion from PDL data into intermediate data, the trapping process is applied to all subdivided objects. As a result, the trapping process brings about image quality drop. Hence, a clustering server receives PDL data, analyzes the PDL data to generate intermediate data and meta data, executes an object combining process with reference to the meta data, executes a trapping former half process, and transmits only the intermediate data to a printing server. A printing server applies a trapping latter half process to the received intermediate data.

## Description

### FIELD OF THE INVENTION

The present invention relates to an image processing apparatus and its method and, more particularly, to misregistration-correction for correcting misregistrations of color plates.

### BACKGROUND OF THE INVENTION

Some misregistration correction (to be referred to as "trapping" hereinafter) processes for correcting misregistrations of C, M, Y, and K color plates in color printers are done in accordance with operators prepared in advance in printer description language data (to be referred to as "PDL" data hereinafter) of a format such as PS (PostScript®), PDF (Portable Document Format), EPS (Encapsulated PostScript®), or the like. Also, some other trapping processes are executed on the basis of information written in PDL data to rewrite PDL data itself, to rewrite intermediate data (i.e., intermediate data for rendering having respective objects as path data of outlines) used in a printing system, or to rewrite bitmap data generated in an output apparatus.

PDL data and intermediate data to which trapping is applied often have different descriptions depending on the way they are created, and differences in modules used in their creation, and their trapping results often become different. A printing system has a large system scale since many peripheral devices are connected. In such system, a scheme such as distributed printing (cluster printing) or the like is often used to attain more efficient printing at higher speed. Such printing system also adopts trapping as one of misregistration correction techniques.

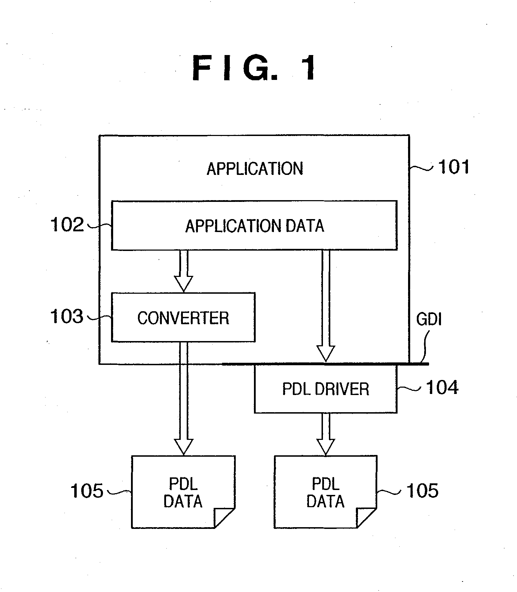

As described above, PDL data and intermediate data output from an application undergo trapping. Two methods of outputting PDL data of these data from an application may be used, as shown in Fig. 1.

In one method, an application 101 directly outputs PDL data 105. The application 101 directly substitutes application data 102 by PDL operations using a converter 103. Note that one operator of the application data 102 is not always substituted by one operator of the PDL data 105, but is often substituted by a plurality of operators (to be referred to as "subdivision of an object" hereinafter).

In the other method of outputting PDL data 105 from the application 101, a PDL driver 104 outputs the PDL data 105 via an operating system (OS). This method is implemented by converting the application data 102 into intermediate data of the OS, and converting the intermediate data into the PDL data 105 by the PDL driver 104. In these two data conversions, object subdivision may occur as in the method of directly outputting the PDL data 105 from the application 101.

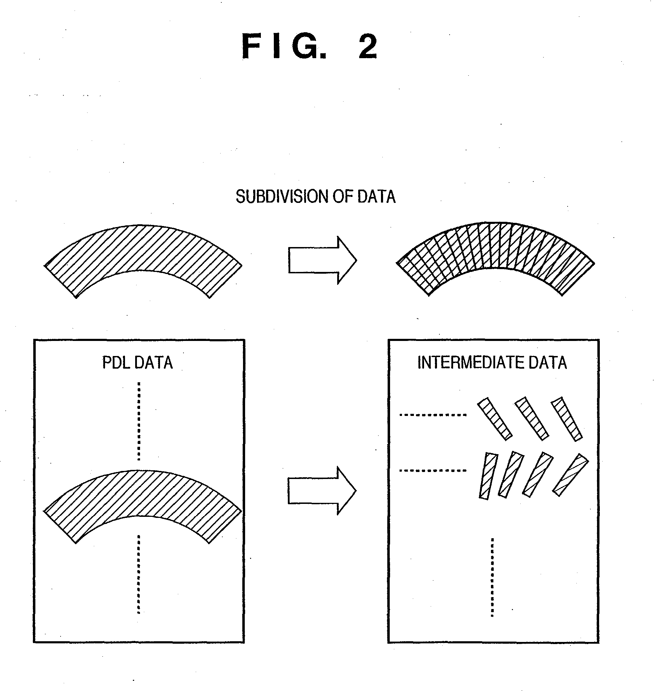

The same phenomenon occurs between PDL data and intermediate data managed in the printing system. In this case, the way PDL data is parsed differs depending on the type of an interpreter used to analyze the PDL, data. As a result, the PDL data that originally expresses one object may be expressed by a plurality of objects in the intermediate data (see Fig. 2).

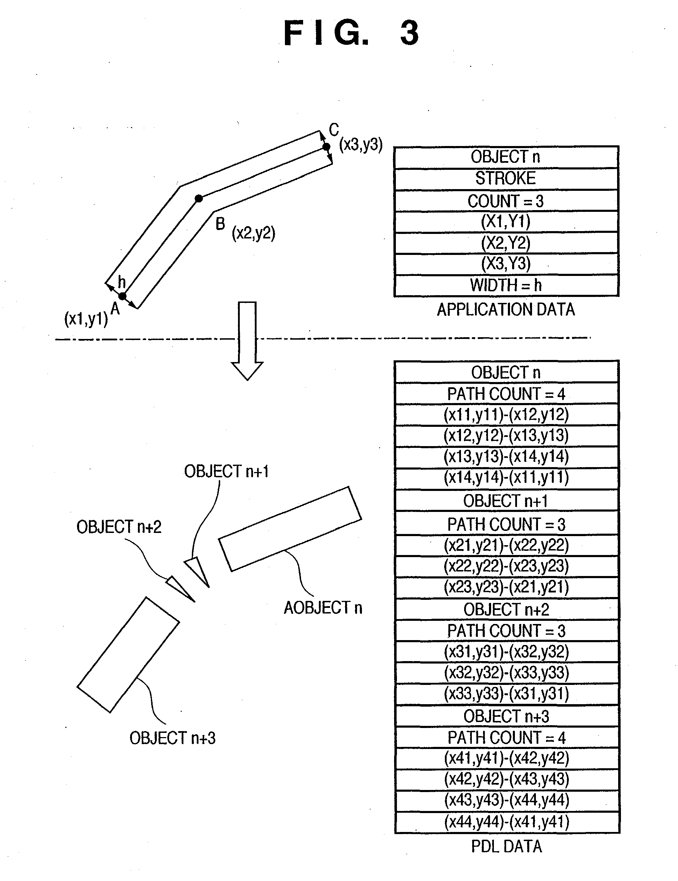

Fig. 3 shows data subdivision as the data configuration, and a case wherein one bent stroke data is drawn by an application. Application data expresses one bent stroke (object) by three points that express a medial axis of the bent stroke, and the thickness of the stroke. However, when this application data is converted into PDL data, it may be subdivided into four objects (n to n+3), as shown in Fig. 3.

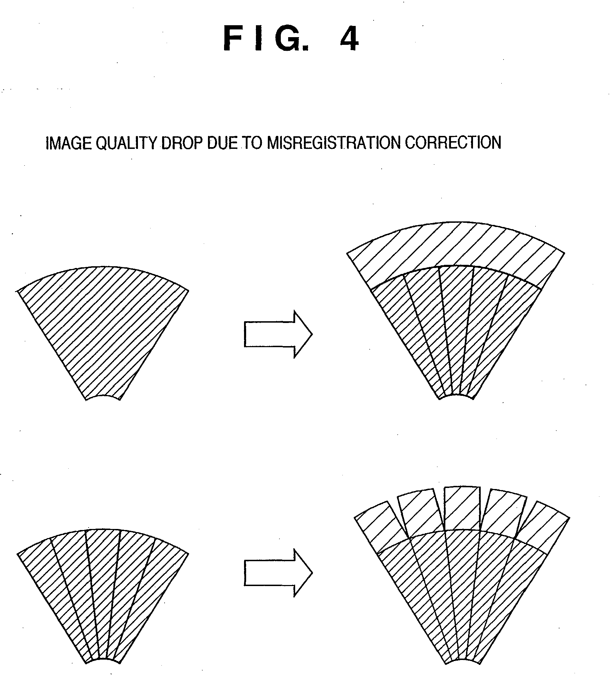

When a trapping process is applied to subdivided data upon conversion from application data to PDL data or upon conversion from PDL data to intermediate data, the trapping process is applied to all the subdivided objects. As a result, the trapping process brings about image quality drop, as shown in Fig. 4.

Note that, for example, Japanese Patent Laid-Open No. 5-130389 describes the trapping process of bitmap data.

### SUMMARY OF THE INVENTION

The first aspect of the present invention discloses a technique for converting application data into page description language data, generating meta data indicating the relationship among objects subdivided in the conversion, combining the subdivided objects in the page description language data using the meta data, converting the page description language data into intermediate data for rendering, and applying a part of misregistration correction of a printer to the intermediate data.

The second aspect of the present invention discloses a technique for converting page description language data into intermediate data for rendering, generating meta data indicating the relationship among objects subdivided in the conversion, combining the subdivided objects in the intermediate data, and applying a part of misregistration correction of a printer to the intermediate data.

According to the present invention, image quality drop due to misregistration correction caused by subdivision of objects can be prevented.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a view showing the methods of outputting PDL data from an application;
Fig. 2 is a view for explaining a case wherein one object in PDL data is expressed as a plurality of objects in intermediate data;
Fig. 3 is a view showing subdivision of an object as the configuration of data;
Fig. 4 is a view showing a state wherein a trapping process brings about image quality drop;
Figs. 5A to 5C are views showing meta data for intermediate data;
Fig. 6 is a view for explaining processing using meta data;
Fig. 7 is a block diagram showing the basic arrangement of an image processing apparatus;
Fig. 8 is a block diagram showing the arrangement of a printing system which performs clustering for the purpose of high-speed outputting;
Fig. 9 is a flowchart showing a method of converting into PDL data using a data convert module included in an application;
Fig. 10 is a flowchart showing a method of converting into PDL data using a PDL driver prepared in an OS;
Fig. 11 is a flowchart showing processing for converting PDL data into intermediate data for rendering;
Fig. 12 is a flowchart for explaining a trapping process for PDL data for which meta data is generated;
Fig. 13 is a flowchart for explaining a trapping process for intermediate data for which meta data is generated;
Fig. 14 is a block diagram showing a printing system;
Fig. 15 is a chart showing the flow of the print process including a trapping process;
Fig. 16 is a flowchart showing the configuration of the trapping process;
Fig. 17 is a view for explaining a node detection process;
Fig. 18 is a view for explaining a base outline detection process;
Figs. 19A to 19C are views showing a trap area generation process;
Fig. 20 shows trap color differences due to different color parameters;
Fig. 21 is a flowchart showing the processes of a clustering server and printing server in the second embodiment;
Fig. 22 shows intermediate data to be transmitted to the printing server;
Fig. 23 is a flowchart showing the processes of a clustering server and printing server in the third embodiment; and
Fig. 24 is a view showing a method of combining subdivided objects.

### DESCRIPTION OF THE PREFERRED EMBODIMENTS

An image process according to preferred embodiments of the present invention will be described in detail hereinafter with reference to the accompanying drawings.

### First Embodiment

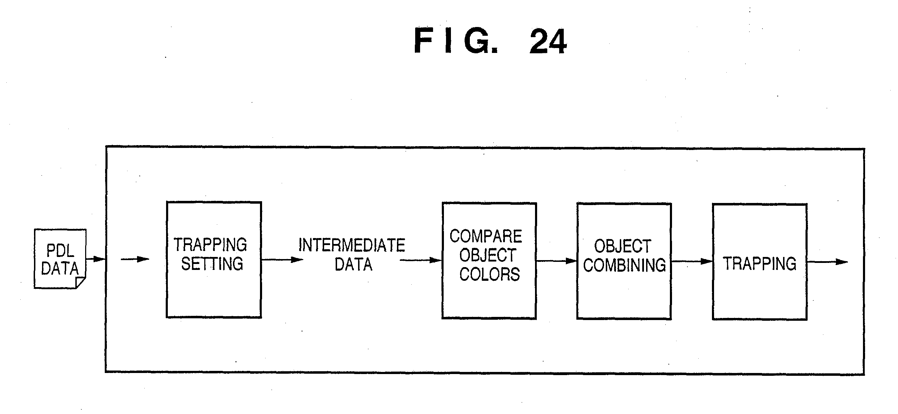

In order to solve the aforementioned problem of object subdivision, for example, a process for comparing the colors of neighboring objects in the state of intermediate data, and combining the objects if they have the same color may be applied (see Fig. 24). With this process, the deterioration of image quality upon applying the trapping process to individual subdivided objects can be avoided. In this case, however, the checking process of the colors of all neighboring objects is required, resulting in a long processing time. Since intermediate data stores object data in a rendering order (Z order), the color checking process must be done in this order. As a result, the combining process may be unwantedly applied to objects which do not originally form an identical object but overlap in the same color.

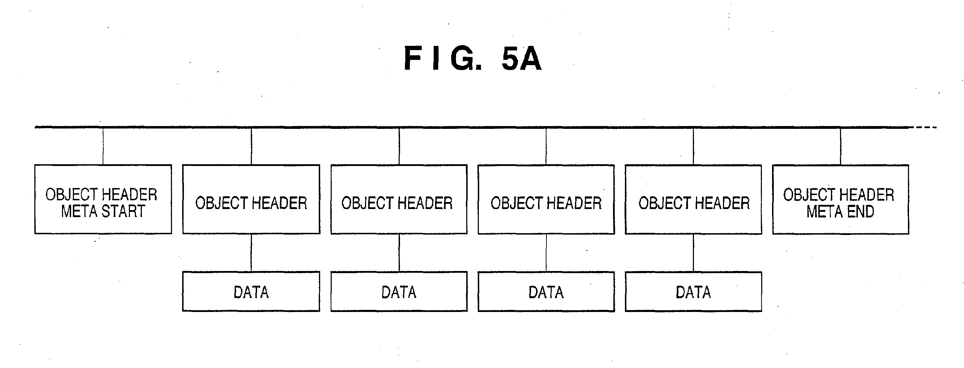

Hence, a solution that easily performs the combining process without any color checking process by separately generating meta data indicating a combination of objects may be used. Figs. 5A to 5C show meta data for intermediate data. The meta data indicates the way how one object is subdivided into a plurality of objects upon converting application data into PDL data or upon converting PDL data into intermediate data. In other words, this information indicates a source object of the subdivided objects.

In an example of Fig. 5A, meta data of an object data format are inserted in the start and end parts of subdivided objects, and a header of the meta data includes data indicating the meta data, and data indicating the start or end of the subdivided object.

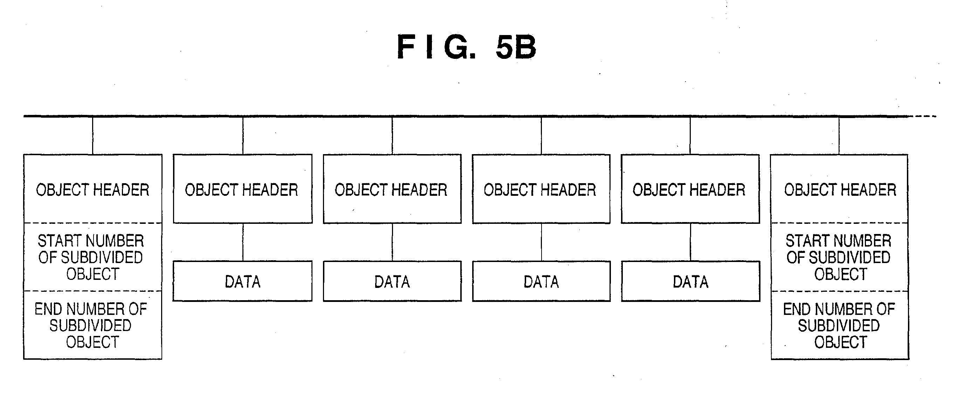

In an example of Fig. 5B, meta data of an object data format is inserted in only the start part of subdivided objects, and a header of the meta data includes the first and last object numbers of the subdivided objects.

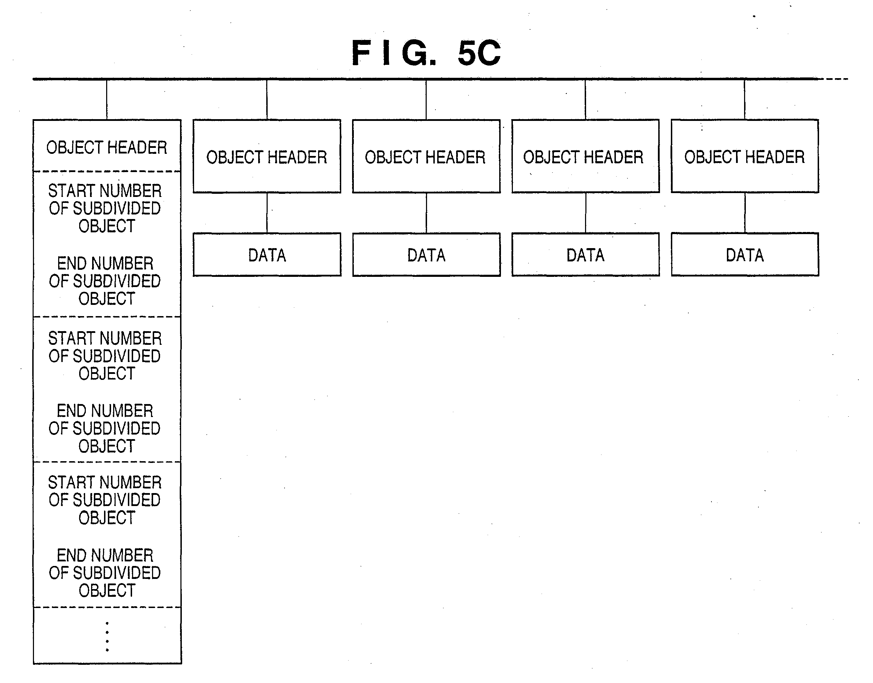

In an example of Fig. 5C, meta data of an object data format is inserted in only the start part of intermediate data, and a header of the meta data includes the start and end object numbers associated with all subdivided objects included in the intermediate data.

In this way, the meta data indicates the relationship among subdivided objects, and may be embedded in intermediate data or may be separately provided as a data file.

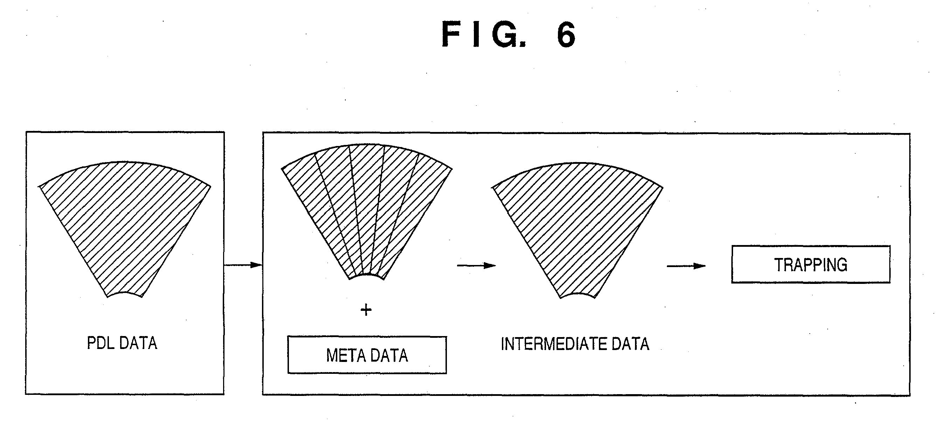

Fig. 6 is a view for explaining processing using meta data. Subdivided objects are combined on the basis of meta data to generate non-divided intermediate data, and trapping is then applied. In this manner, the problem caused by subdivision of objects can be solved using the meta data.

Of course, the case has been exemplified wherein meta data is generated upon generation of intermediate data. Also, similar meta data may be generated upon conversion from application data into PDL data, and subdivided objects may be combined on the basis of the meta data associated with the PDL data upon conversion from the PDL data into intermediate data.

### [Hardware Arrangement]

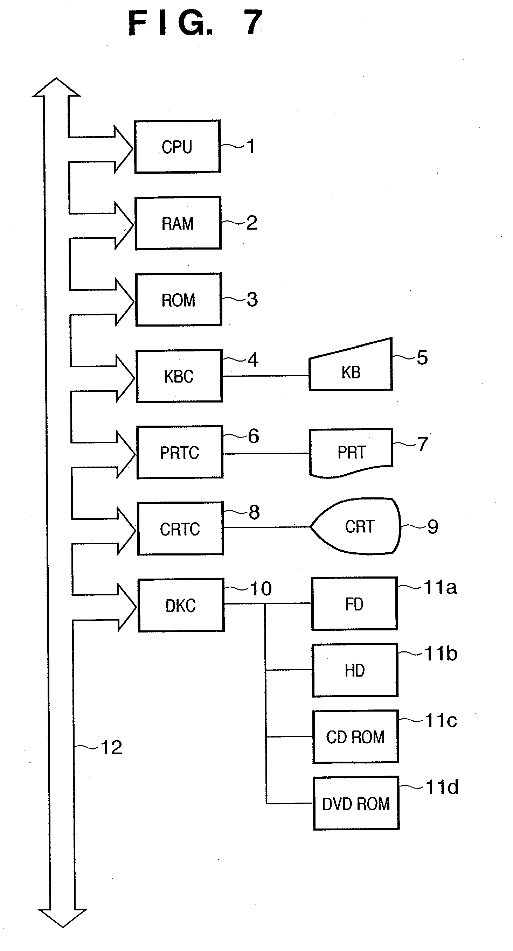

Fig. 7 is a block diagram showing the basic arrangement of an image processing apparatus.

A central processing unit (CPU) 1 performs control of the overall apparatus and arithmetic processing via a system bus 12. A random-access memory (RAM) 2 provides a work area of the CPU 1, on which programs for respective processes (e.g., drawing software, a misregistration correction control program, and the like to be described later) and data are loaded and executed under the control of the CPU 1. A read-only memory (ROM) 3 provides a storage area of a system control program (basic input/output system (BIOS), font data, and the like. A keyboard controller (KBC) 4 receives data based on key inputs at a keyboard (KB) 5, and transfers them to the CPU 1. A printer controller (PRTC) 6 controls a printer (PRT) 7 such as a laser beam printer, ink-jet printer, or the like. A display controller (CRTC) 8 performs display control of a display (CRT) 9.

A disk controller (DKC) 10 performs data transfer control and the like between disk devices and the system bus 12. The disk devices include external storage devices such as a flexible disk device (FD) 11a, hard disk device (HD) 11b, CD-ROM device 11c, DVD-ROM device 11d, and the like, and store programs and data. The CPU 1 loads programs and data stored in each disk device onto the RAM 2 as needed upon execution of processing.

When the power switch of the image processing apparatus is turned on, an initial program loader (IPL) of the BIOS loads an operating system (OS) from the HD 11b onto the RAM 2, the CPU 1 starts the operation of the OS, and execution of drawing software starts in accordance with a user's instruction.

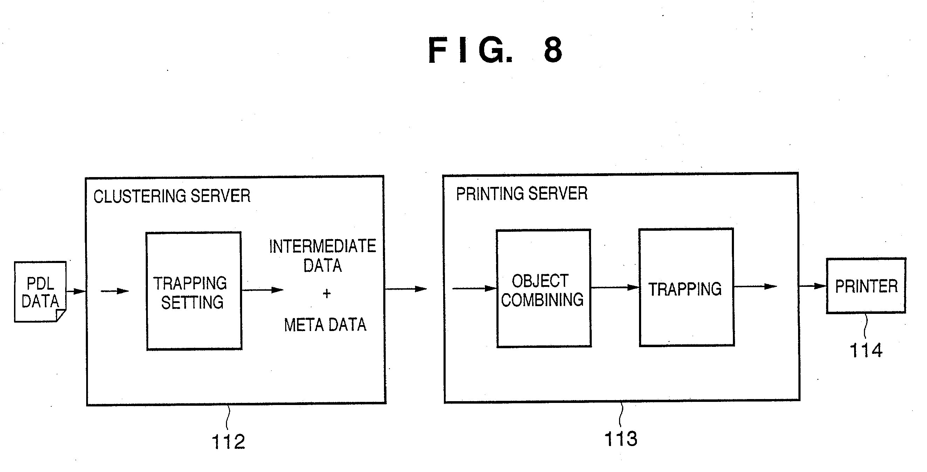

Fig. 8 is a block diagram showing the arrangement of a printing system which performs clustering for the purpose of high-speed outputting.

A clustering server 112 receives PDL data, converts the PDL data into intermediate data for rendering, and outputs the intermediate data to a printing server 113. Fig. 8 shows only one printing server 113. However, in practice, printing servers 113 exist as many as printers that join in clustering. The printing server 113 receives the intermediate data, applies processes such as trapping and the like to the intermediate data, and outputs bitmap data obtained by rendering the intermediate data to a printer 114. When no clustering is done, PDL data is input to the printing server 113 and is converted into intermediate data, which is rendered to bitmap data.

The hardware arrangement of the clustering server 112 and printing server 113 is substantially the same as the basic arrangement of the image processing apparatus shown in Fig. 7, and a detailed description thereof will be omitted. Control programs for clustering, rendering, and misregistration correction and related data, which are supplied from a storage medium (FD, CD-ROM, or DVD-ROM) are installed or copied in the HD 11b, and the CPU 1 executes the basic input/output system (BIOS) stored in the ROM 3, and the operating system (OS) and respective control programs stored in the HD 11b, thus implementing the clustering server 112 and printing server 113.

### [Generation of Meta Data 1]

An example in which meta data is generated upon outputting PDL data from an application will be described first.

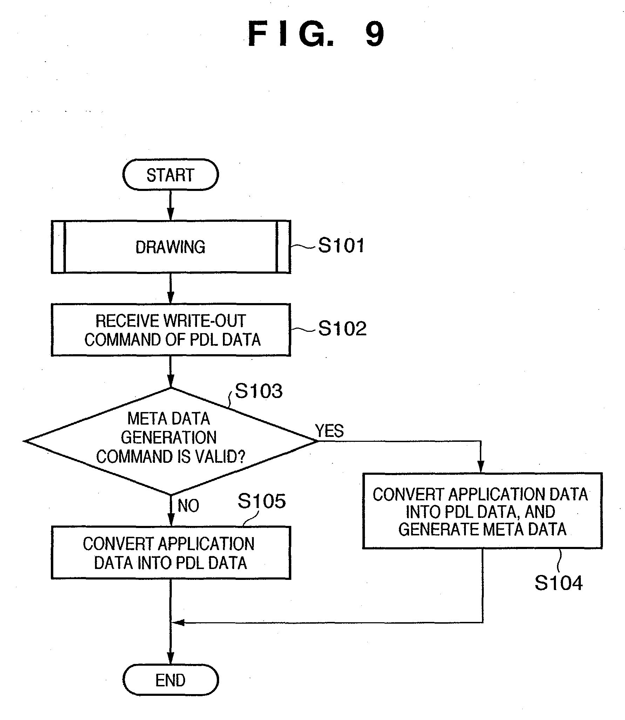

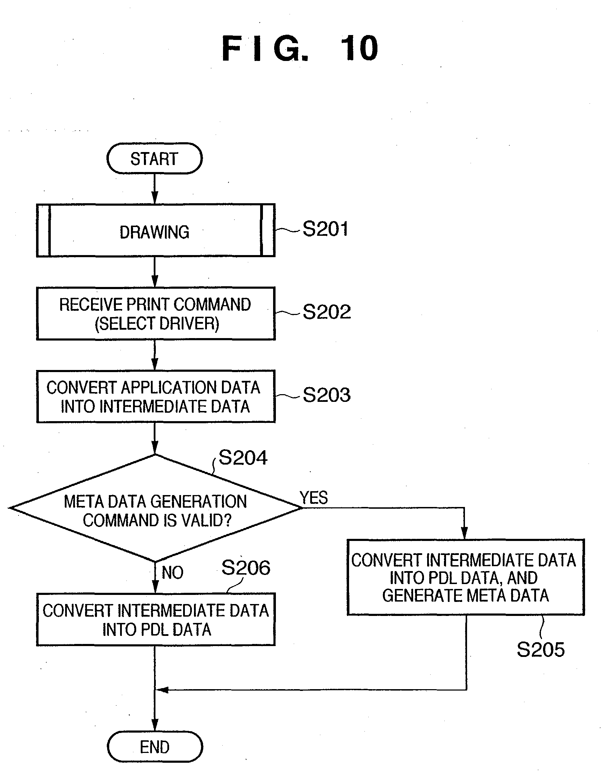

Figs. 9 and 10 are flowcharts showing processing associated with generation of meta data upon outputting PDL data from an application. The method of outputting PDL data from an application includes the aforementioned two methods. Fig. 9 shows the method of converting into PDL data using a data convert module included in an application (i.e., a process example of drawing software such as a desktop publishing (DTP) application or the like), and Fig. 10 shows the method of converting into PDL data using a PDL driver prepared in the OS (i.e., a cooperative process example of the drawing software and PDL driver).

### •Conversion by Application

In Fig. 9, the user performs drawing (S101), and upon reception of a write-out command of application data to PDL data (S102), the presence/absence of a meta data generation command is checked (S103). When a combining process of objects is required, the meta data generation command is used to accurately and easily execute the combining process using the meta data.
This command is designated on a user interface used to instruct a write-out command of PDL data, or it is automatically issued when the trapping process is designated on the application. If it is determined that the meta data generation command is valid, PDL data and meta data are generated (S104): otherwise, PDL data alone is generated (S105).

The application converts into PDL data by holding operators of application data, and substituting them by operators of recognized PDL data. Therefore, when one operator of application data can correspond to one operator of PDL data, it is converted into one operator; otherwise, it is converted into a plurality of operators (objects), as shown in Fig. 3. In the example of Fig. 3, a stroke expressed by a medial axis and thickness in the application data is expressed by two rectangles and two triangles in the PDL data for which a similar operation is not prepared.

If the meta data generation command is valid, meta data is generated simultaneously with the above conversion process. When an object is subdivided, as shown in Fig. 3, in other words, when operator substitution (conversion) cannot be made to have one-to-one correspondence, the application generates identification data of subdivided objects as meta data (see Figs. 5A to 5C).

### •Conversion by PDL Driver

In Fig. 10, the user performs drawing on the application (S201), and upon reception of a print command (S202), the application converts application data into intermediate data managed in the OS (S203). When a print instruction is issued, since PDL drivers prepared on the OS are listed on a user interface, the user can select a desired PDL driver.

Upon reception of a file output command (print command) via the OS, the PDL driver checks the presence/absence of a meta data generation command (S204). The meta data generation command is designated on a user interface of the PDL driver, or it is automatically generated when execution of the trapping process is designated on the application. If the meta data generation command is valid, the PDL driver generates PDL data and meta data (S205); otherwise, it generates PDL data alone (S206).

In this way, conversion from application data into PDL data is attained by two conversions, i.e., conversion into intermediate data by the application, and conversion into PDL data by the PDL driver. In this case, when operators cannot be substituted to have one-to-one correspondence, one operator of application data is converted into a plurality of operators (objects), as shown in Fig. 3.

If the meta data generation command is valid, meta data is generated simultaneously with the above conversion process. When an object is subdivided, as shown in Fig. 3, in other words, when operator substitution (conversion) cannot be made to have one-to-one correspondence, the application generates identification data of subdivided objects as meta data (see Figs. 5A to 5C).

### [Generation of Meta Data 2]

An example in which meta data is generated upon converting PDL data into intermediate data for rendering will be described below.

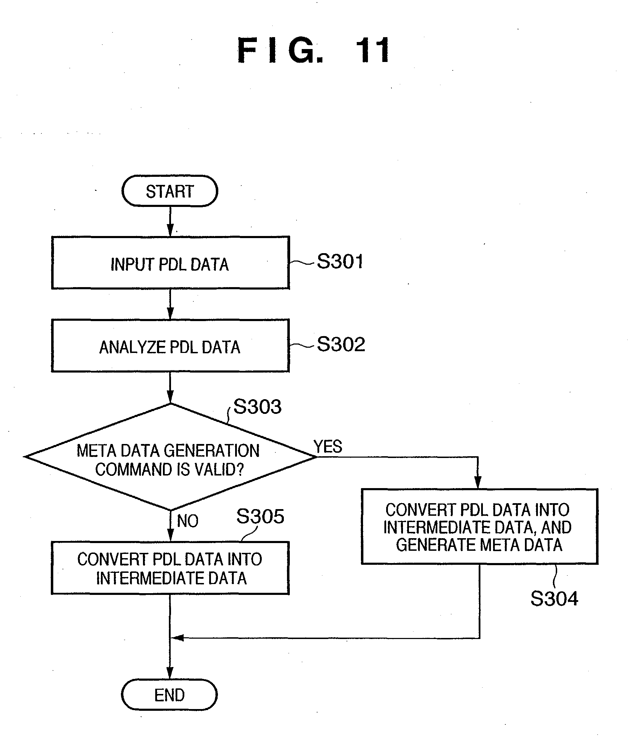

Fig. 11 is a flowchart showing the processing for converting PDL data into intermediate data for rendering. This processing is executed by the clustering server 112 or printing server 113.

If PDL data is input (S301), the PDL data is analyzed to parse a description of the PDL data (S302) and to check the presence/absence of a meta data generation command (S303). The meta data generation command is designated on a user interface of the printing system, or it is automatically issued when the trapping process is designated on the printing system. If it is determined that the meta data generation command is valid, intermediate data and meta data are generated (S304); otherwise, intermediate data alone is generated (S305).

PDL data is converted into intermediate data by substituting the analysis result of the PDL data by operators prepared in the intermediate data. Since processing for the analysis result of the PDL data differs depending on the manufacturer of an interpreter used to analyze the PDL data, one original object may be processed as a set of a plurality of objects. In this case, intermediate data that expresses a plurality of objects is generated as in the relationship between the application data and PDL data shown in Fig. 3. If the meta data generation command is valid, identification data of subdivided objects is generated as meta data.

### [Trapping Process]

The trapping process of PDL data or intermediate data for which meta data is generated will be described below. Note that details of the trapping process will be described later.

### •In Case of PDL Data

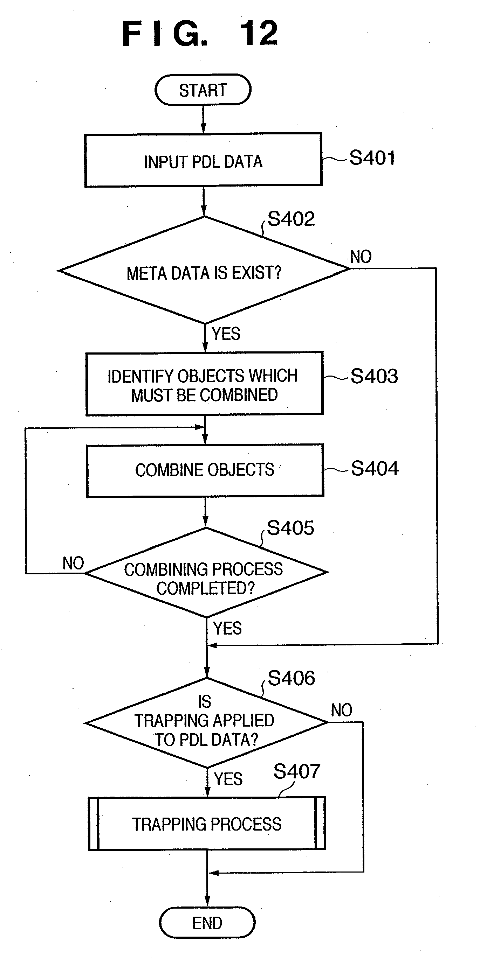

Fig. 12 is a flowchart for explaining the trapping process for PDL data for which meta data is generated. This process is executed by the clustering server 112 or printing server 113.

PDL data to be processed is input (S401), and it is checked if meta data is generated for the PDL data (S402). If no meta data is generated, the flow jumps to step S406.

If meta data is generated, objects which must be combined are identified with reference to the meta data (S403). As a result of identification, objects which must be combined are combined (S404). In this combining process, two objects are combined based on control point levels which form outlines so that outlines of two objects form an outline of one object. The objects before they are combined are substituted by the combined object, thus achieving consistency among descriptions of the PDL data.

It is checked if all objects which must be combined have been combined (S405). If objects to be combined still remain, the flow returns to step S404 to repeat the combining process.

Upon completion of the combining process, it is checked if trapping is to be applied to the PDL data (S406). If a trapping command for the PDL data is valid, the trapping process is applied to the PDL data (S407).

### •In Case of Intermediate Data

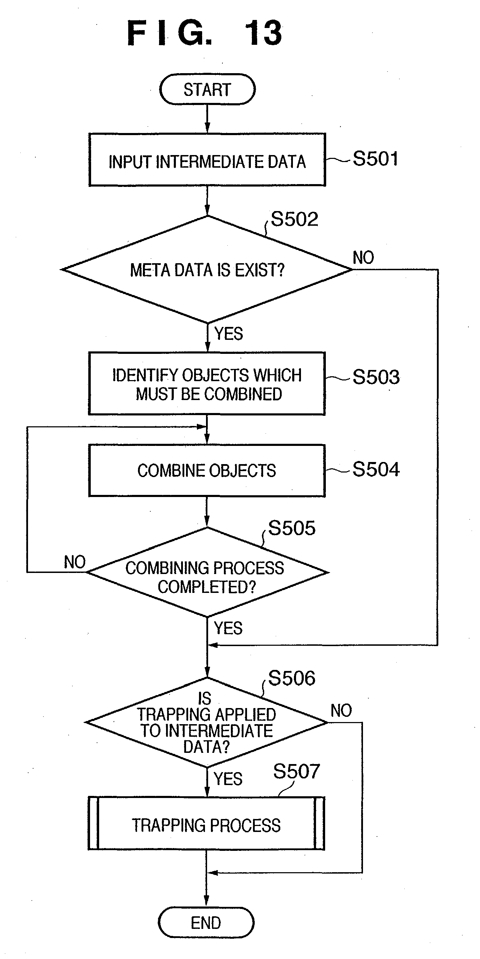

Fig. 13 is a flowchart for explaining the trapping process for Intermediate data for which meta data is generated. This process is executed by the printing server 113 which renders the intermediate data.

Intermediate data to be processed is input (S501), and it is checked if meta data is generated for the intermediate data (S502). If no meta data is generated, the flow jumps to step S506.

If meta data is generated, objects which must be combined are identified with reference to the meta data (S503). As a result of identification, objects which must be combined are combined (S504). In this combining process, two objects are combined based on control point levels which form outlines so that outlines of two object form an outline of one object. The objects before they are combined are substituted by the combined object, thus attaining consistency among descriptions of the intermediate data.

It is checked if all objects which must be combined have been combined (S505). If objects to be combined still remain, the flow returns to step S504 to repeat the combining process.

Upon completion of the combining process, it is checked if trapping is to be applied to the intermediate data (S506). If a trapping command for the intermediate data is valid, the trapping process is applied to the intermediate data (S507).

By exploiting the meta data in this way, objects subdivided in the PDL data or intermediate data for rendering can be accurately combined without any color checking process. As a result, the image quality drop due to the trapping process can be prevented.

### Second Embodiment

An image process according to the second embodiment of the present invention will be described below. Note that the same reference numerals in the second embodiment denote the same parts as those in the first embodiment, and a detailed description thereof will be omitted.

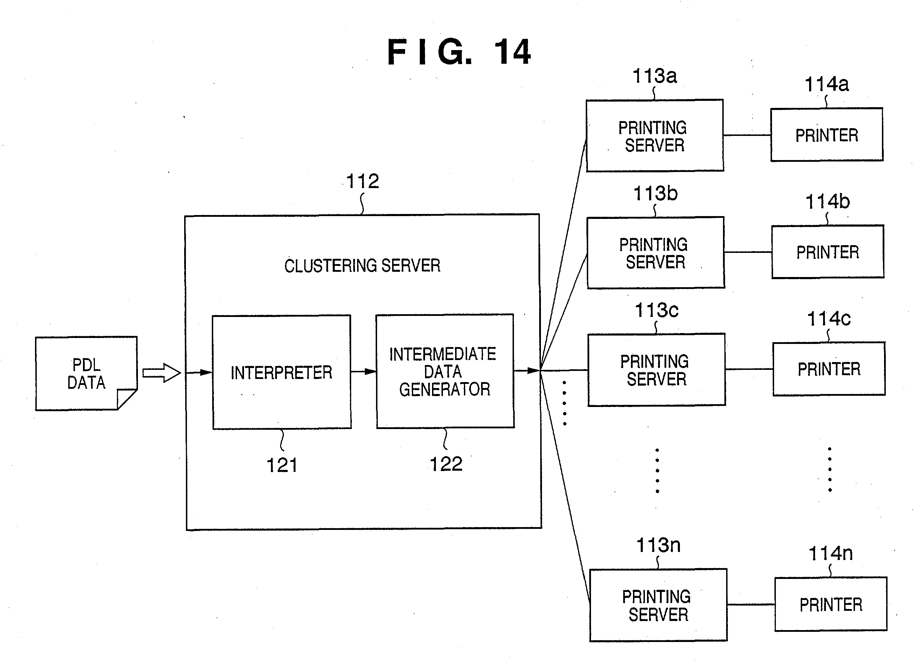

Fig. 14 is a block diagram showing a printing system in the second embodiment.

A clustering server 112 has an interpreter 121 that analyzes PDL data, and an intermediate data generator 122 for generating intermediate data on the basis of the analysis result. A plurality of printing servers 113a, 113b, 113c,..., 113n are respectively connected to printers 114a, 114b, 114c,..., 114n. The clustering server 112 distributes and transmits a print job to the plurality of printing servers 113 in consideration of load distribution of the print job, thus performing the print process using the plurality of printers 114.

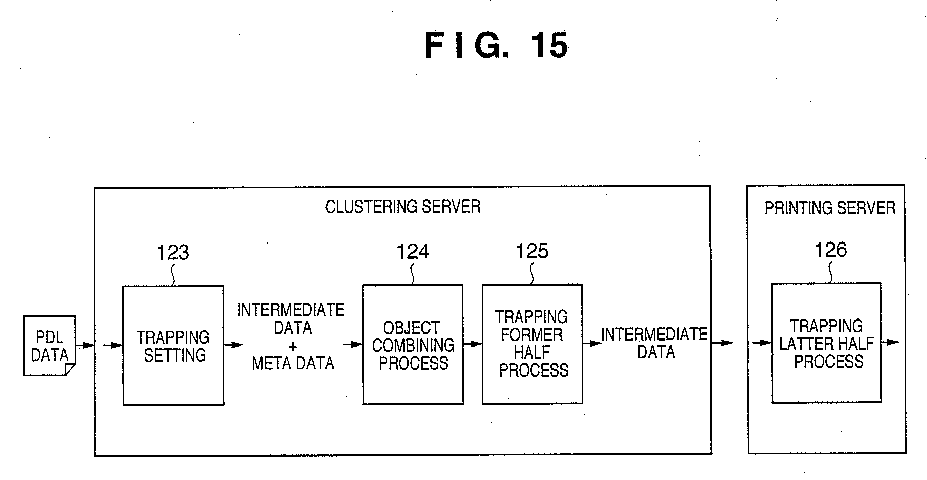

Fig. 15 is a chart showing the flow of the print process including a trapping process. It is important that the trapping process is divided into a former half process 125 and latter half process 126, the former half process 125 is executed by the clustering server 112, and the latter half process 126 is executed by the printing server 113. Note that a trapping setting 123 is a setting indicating whether or not the trapping process is to be executed, and an object combining process 124 is a process for combining objects which must be combined with reference to meta data (steps S503 to S505 in Fig. 13).

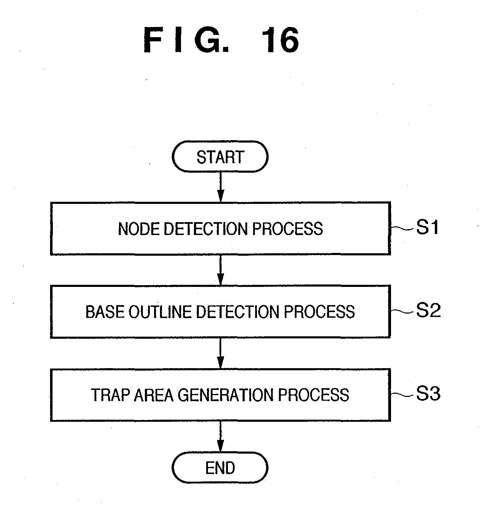

Fig. 16 is a flowchart showing the configuration of the trapping process. The trapping process can be roughly classified into a node detection process S1, base outline detection process S2, and trap area generation process S3.

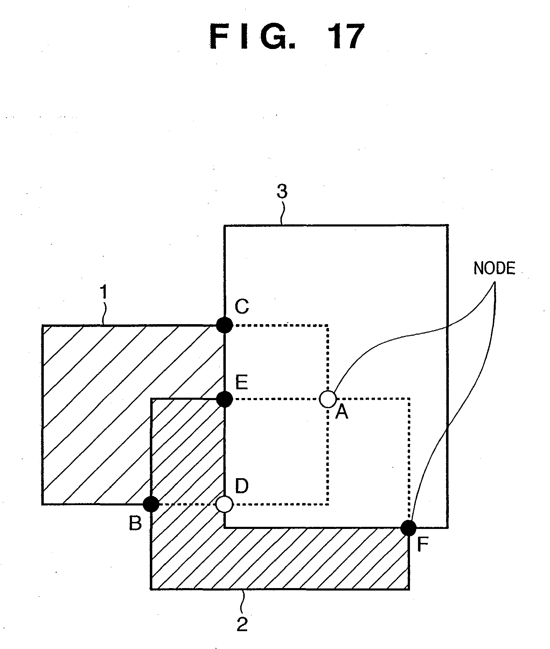

Fig. 17 is a view for explaining the node detection process S1. The node detection process S1 detects nodes of target objects. In the example shown in Fig. 17, based on an overlapping state of objects 1, 2, and 3, nodes A and B are detected between objects 1 and 2, nodes C and D are detected between objects 1 and 3, and nodes E and F are detected between objects 2 and 3.

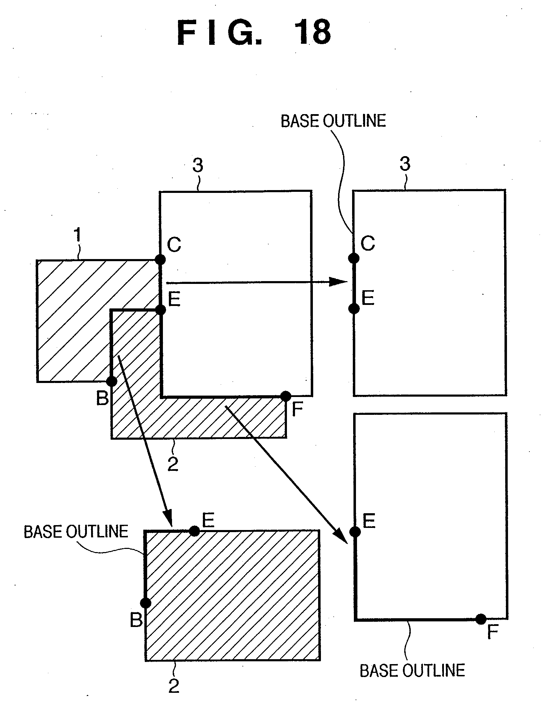

Fig. 18 is a view for explaining the base outline detection process S2. A base outline is data indicating the position of an upper object where a trap area is generated on an outline between overlapping objects. In the example of Fig. 18, based on the detected nodes A to F, an outline between the nodes B and E on the outline of object 2 between objects 1 and 2, an outline between the nodes E and C on the outline of object 3 between objects 1 and 3, and an outline between the nodes E and F on the outline of object 3 between objects 2 and 3 are detected as base outlines.

If the trapping process is completed up to the base outline detection process S2, the subsequent processes, e.g., the trap area generation process S3 and a trap color generation process implemented by changing parameters of color generation, can be freely set and processed by each printing server 113 connected to the clustering server 112.

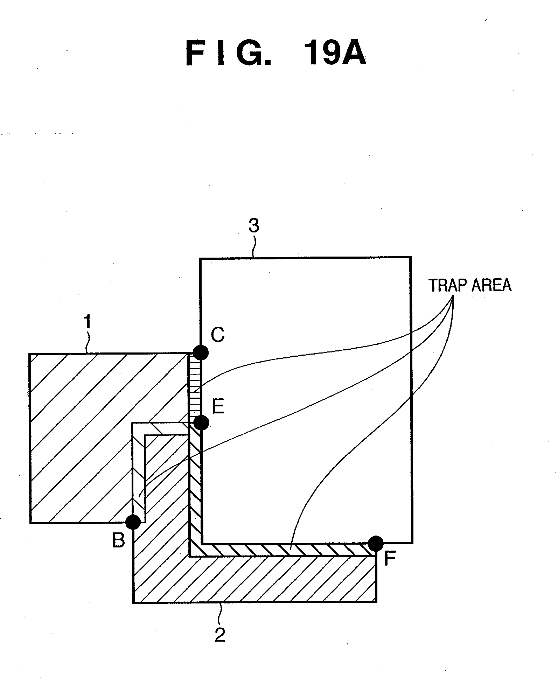

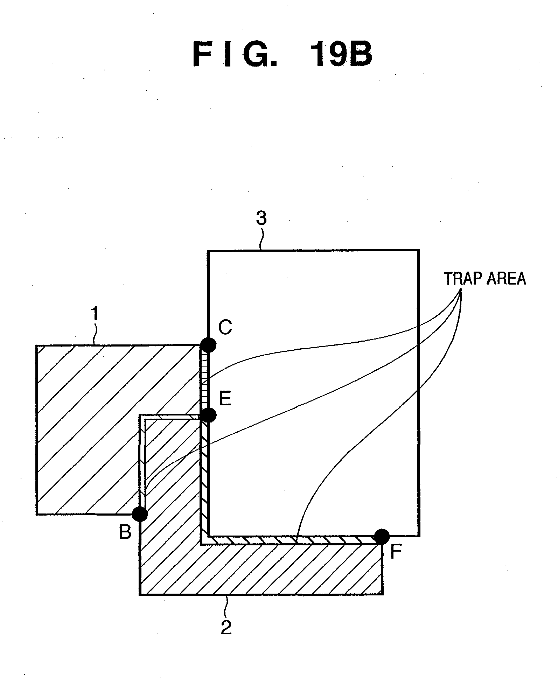

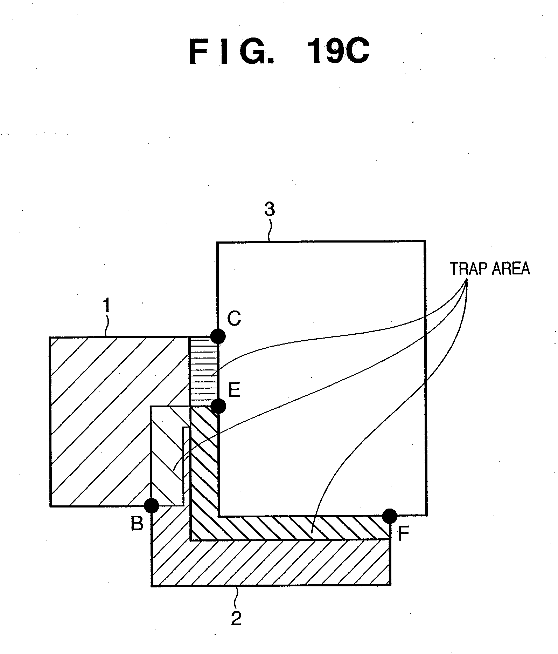

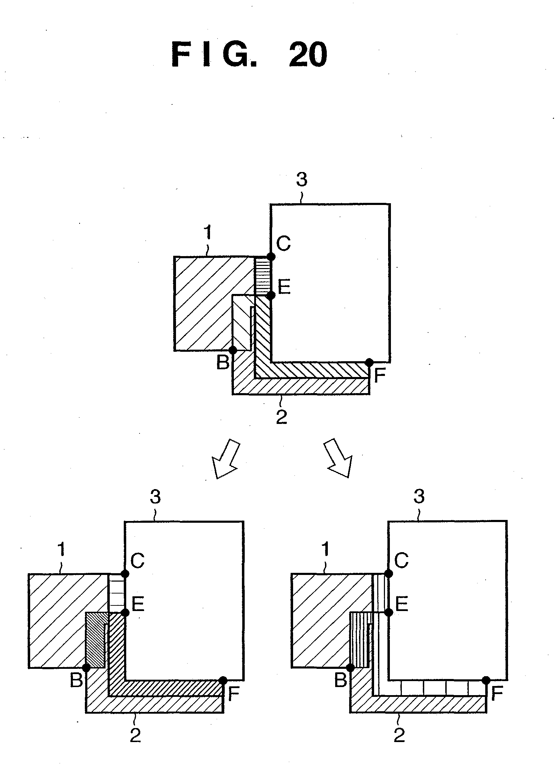

Fig. 19A shows the trap area generation process S3. Based on the detected base outlines B-E, E-C, and F-E, trap areas are generated based on a set trap width. Fig. 19B shows trap areas which have a smaller trap width than Fig. 19A, and Fig. 19C shows trap areas which have a larger trap width than Fig. 19A. Fig. 20 shows trap color differences due to different color parameters.

Of these three processes (node detection process S1, base outline detection process S2, and trap area generation process S3), the process that depends on the state of an output apparatus (printer 114) is the trap area generation process S3 which sets a trap width according to misregistrations of color plates of the output apparatus. Hence, the printing server 113 executes the trap area generation process S3 that depends on the state of the output apparatus as the latter half process 126, and the clustering server 112 with higher processing performance executes the object combining process 124 that requires meta data, and the node detection process S1 and base outline detection process S2 whose processes themselves are heavy as the former half process 125. In this way, as shown in Fig. 15, the clustering server 112 need not transmit meta data to the printing server 113 together with intermediate data, and can execute the object combining process 124 and trapping former half process 125 (node detection process S1 and base outline detection process S2) at high speed.

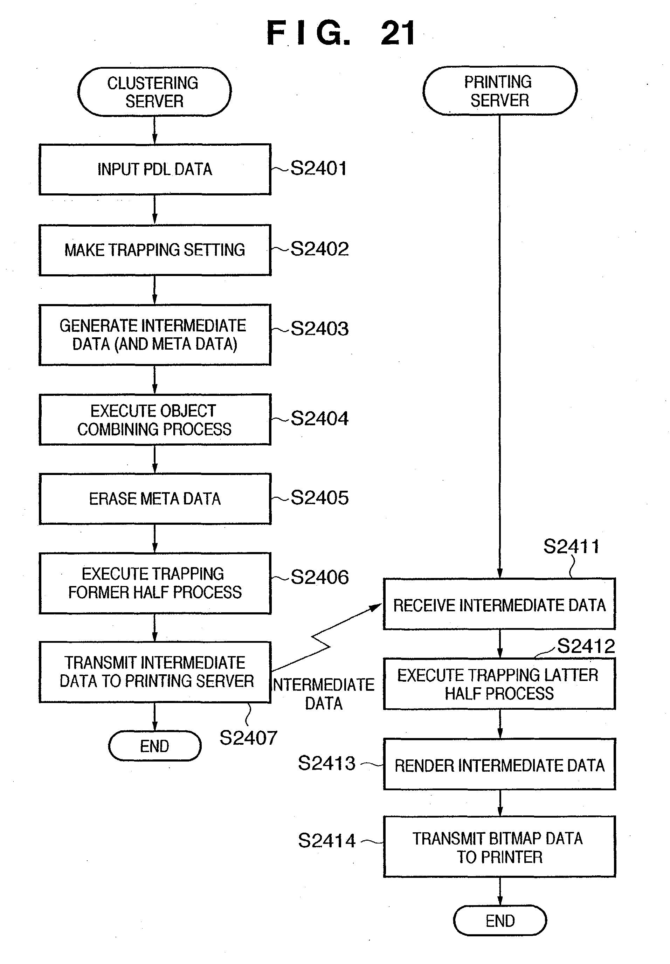

Fig. 21 is a flowchart showing the processes of the clustering server 112 and printing server 113 in the second embodiment.

The clustering server 112 inputs PDL data (S2401), makes a trapping setting (S2402), analyzes the PDL data using the interpreter 121, and generates intermediate data and meta data using the intermediate data generator 122 (S2403). Note that the meta data generation process has been explained using Fig. 11, and a detailed description thereof will be omitted.
The following description will be given under the assumption that execution of the trapping process is designated in the trapping setting 123 (S2402), and the intermediate data generator 122 generates meta data.

The clustering server 112 executes the object combining process 124 with reference to the meta data (S2404), and deletes the meta data which becomes unnecessary (S2405). Note that the object combining process 124 has been explained using Fig. 13, and a detailed description thereof will be omitted. When the meta data is inserted in the intermediate data, the meta data is deleted, and grammatical consistency of the intermediate data is taken.

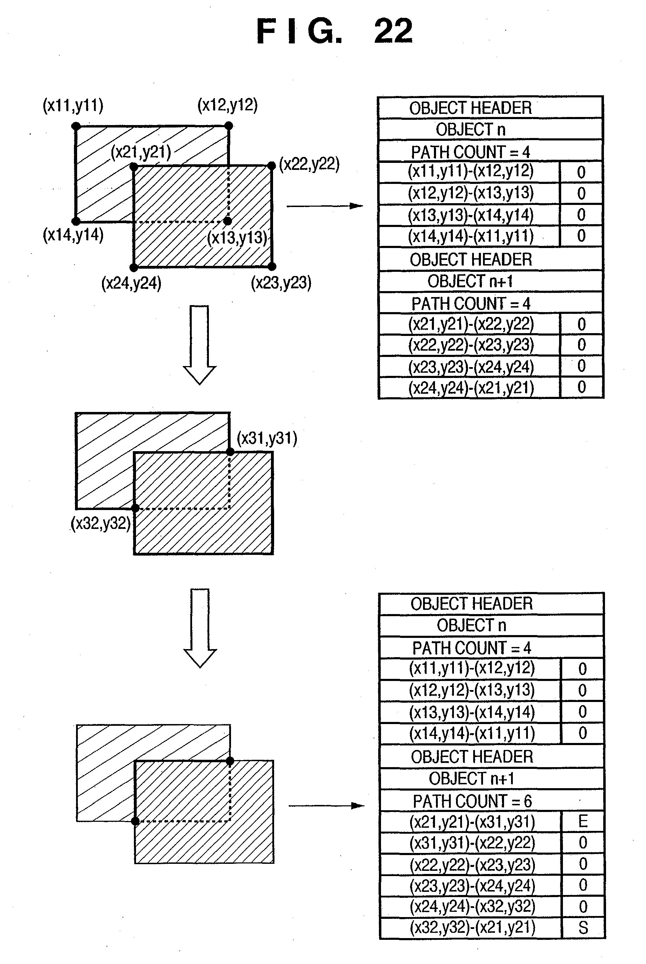

Next, the clustering server 112 executes the trapping former half process 125 (S2406), and transmits only the intermediate data to each printing server 113 (S2407). The intermediate data to be transmitted to the printing server 113 includes the result of the trapping former half process 125 executed so far, i.e., data required for the trapping latter half process 126. Fig. 22 shows the intermediate data to be transmitted to the printing server 113. Node information and base outline information are added in addition to information of control points which form an object of the intermediate data. In the example of Fig. 22, node information (x31, y31), node information (x32, y32), and a start point (x32, y32) and end point (x31, y31) of a base outline are added.

The printing server 113 receives the intermediate data shown in Fig. 22 (S2411), and applies the trapping latter half process 126 to the received intermediate data (S2412). In this case, the printing server 113 uses, as the trap width, a value which is set in correspondence with the state of the corresponding printer 114. The printing server 113 renders the intermediate data after trapping (S2413), and transmits bitmap data as the rendering result to the printer 114 (S2414).

As described above, the problem caused by subdivision of objects can be solved using the meta data. However, in order to implement trapping, the printing system must manage meta data together with intermediate data, and must consider an increase in management data size. Especially, in a large-scale printing system that performs clustering for the purpose of high-speed outputting, if the printing server 113 in an output apparatus or connected to it executes the object combining process 124, the data size to be transferred from the clustering server 112 to the printing server 113 increases, and the data transfer time is prolonged. Since only one clustering server 112 is required compared to the printing servers 113 which are required one each in correspondence with the output apparatuses (printers 114), a high-speed machine that can attain high-speed processing can be easily appropriated. Hence, when the clustering server 112 executes the object combining process 124 like in the second embodiment, the data transfer time can be prevented from being prolonged, and when it also executes the trapping former half process 125 with a heavy processing load, the processing load on each printing server 113 can be reduced.

### Third Embodiment

An image process according to the third embodiment of the present invention will be described below. Note that the same reference numerals in the third embodiment denote the same parts as those in the first and second embodiments, and a detailed description thereof will be omitted.

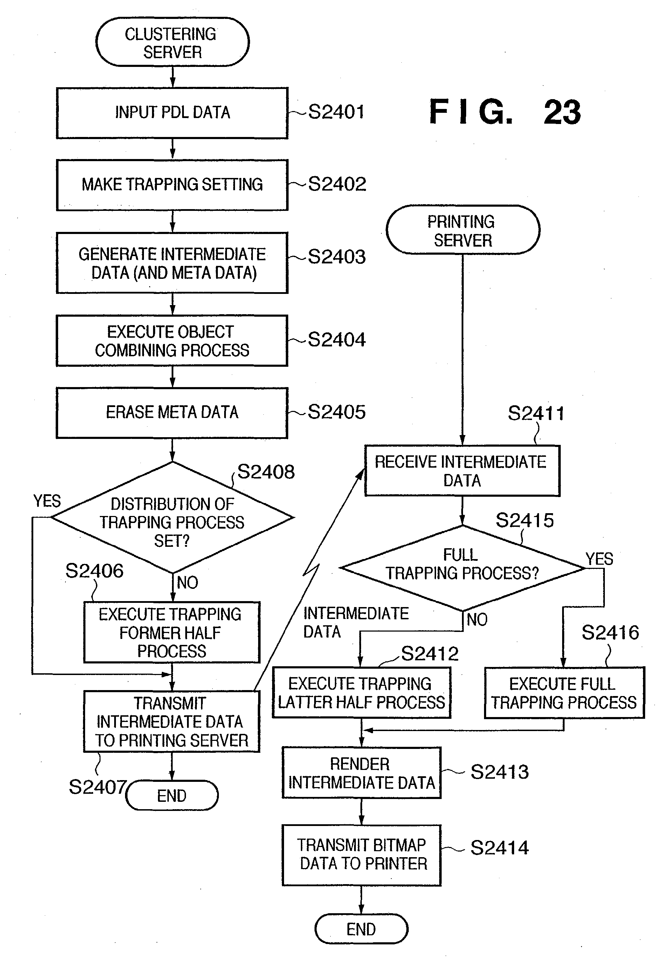

Fig. 23 is a flowchart showing the processing of the clustering server 112. The same step numbers in Fig. 23 denote the same processes as in Fig. 21, and a detailed description thereof will be omitted.

In the trapping setting 123 in step S2402, distribution of the trapping process can be designated. That is, when the printing server 113 is expected to execute a sufficiently high-speed process, it may execute the entire trapping process. When the trapping setting 123 allows to set whether or not the trapping process is distributed, a higher degree of freedom can be given to the printing system.

Hence, the clustering server 112 checks if distribution of the trapping process is set (S2408). If distribution of the trapping process is set, the clustering server 112 transmits only intermediate data to the printing server 113 without executing any trapping former half process 124 (S2407).

Upon reception of the intermediate data (S2411), the printing server 113 checks if it executes the full trapping process (S2415). A flag indicating if the trapping former half process 125 is or is not processed is prepared in the header of the intermediate data, and this checking process is done by checking if this flag is set (processed). That is, if the flag is set, the printing server 113 executes the trapping latter half process 126 (S2412); otherwise, it executes the full trapping process (S2416).

### <Other Embodiments>

Note that the present invention can be applied to an apparatus comprising a single device or to system constituted by a plurality of devices.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code installed in the computer also implements the present invention. In other words, the claims of the present invention also cover a computer program for the purpose of implementing the functions of the present invention.

In this case, so long as the system or apparatus has the functions of the program, the program may be executed in any form, such as an object code, a program executed by an interpreter, or scrip data supplied to an operating system.

Example of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM and a DVD-R).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

It is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Besides the cases where the aforementioned functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

As many apparently widely different embodiments of the present invention can be made without departing from the spirit and scope thereof, it is to be understood that the invention is not limited to the specific embodiments thereof except as defined in the appended claims.

## Claims

1. An image processing apparatus comprising:
a first converter, arranged to convert application data into page description language data, and to generate meta data indicating a relationship of objects subdivided in the conversion;
a combiner, arranged to combine the subdivided objects in the page description language data using the meta data;
a second converter, arranged to convert the page description language data into intermediate data for rendering; and
a corrector, arranged to apply misregistration correction of a printer to the intermediate data.

2. An image processing apparatus comprising:
a converter, arranged to convert page description language data into intermediate data for rendering, and to generate meta data indicating a relationship of objects subdivided in the conversion;
a combiner, arranged to combine the subdivided objects in the intermediate data using the meta data; and
a corrector, arranged to apply misregistration correction of a printer to the intermediate data.

3. The apparatus according to claim 2, further comprising:
an eraser, arranged to erase the meta data after the combining process by said combiner; and
a transmitter, arranged to transmit the intermediate data output from said combiner or said corrector to the printer.

4. The apparatus according to claim 3, wherein the printer applies a full part or a part of the misregistration correction to the received intermediate data.

5. The apparatus according to claim 4, wherein the part of the misregistration correction comprises a node detection process of overlapping objects, and a base outline detection process based on a result of the node detection process, or a trap area generation process based on a result of the base outline detection process.

6. The apparatus according to claim 2, wherein the meta data indicates correspondence between one object in data before the conversion, and a plurality of objects in data after the conversion.

7. The apparatus according to claim 2, wherein said combiner generates one outline data by combining outline data of the subdivided objects, and outputs data that reflects a result of the combining process.

8. An image processing method comprising the steps of:
converting application data into page description language data;
generating meta data indicating a relationship of objects subdivided in the conversion;
combining the subdivided objects in the page description language data using the meta data;
converting the page description language data into intermediate data for rendering; and
applying misregistration correction of a printer to the intermediate data.

9. An image processing method comprising the steps of:
converting page description language data into intermediate data for rendering;
generating meta data indicating a relationship of objects subdivided in the conversion;
combining the subdivided objects in the intermediate data using the meta data; and
applying misregistration correction of a printer to the intermediate data.

10. The method according to claim 9, further comprising the steps of:
erasing the meta data after the combining process; and
transmitting the combined or corrected intermediate data to the printer.

11. A computer program for an image processing method, said method comprising the steps of:
converting application data into page description language data;
generating meta data indicating a relationship of objects subdivided in the conversion;
combining the subdivided objects in the page description language data using the meta data;
converting the page description language data into intermediate data for rendering; and
applying misregistration correction of a printer to the intermediate data.

12. A computer program for an image processing method, said method comprising the steps of:
converting page description language data into intermediate data for rendering;
generating meta data indicating a relationship of objects subdivided in the conversion;
combining the subdivided objects in the intermediate data using the meta data; and
applying misregistration correction of a printer to the intermediate data.

13. A computer program product stored on a computer readable medium comprising program code for an image processing method, said method comprising the steps of:
converting application data into page description language data;
generating meta data indicating a relationship of objects subdivided in the conversion;
combining the subdivided objects in the page description language data using the meta data;
converting the page description language data into intermediate data for rendering; and
applying misregistration correction of a printer to the intermediate data.

14. A computer program product stored on a computer readable medium comprising program code for an image processing method, said method comprising the steps of:
converting page description language data into intermediate data for rendering;
generating meta data indicating a relationship of objects subdivided in the conversion;
combining the subdivided objects in the intermediate data using the meta data; and
applying misregistration correction of a printer to the intermediate data.

15. An image processing apparatus comprising:
a converter, arranged to convert object data, and to generate meta data indicating a relationship of objects subdivided in the conversion;
a combiner, arranged to combine the subdivided objects using the meta data; and
a corrector, arranged to apply misregistration correction of a printer to the combined object.

16. An image processing method comprising the steps of:
converting object data;
generating meta data indicating a relationship of objects subdivided in the conversion;
combining the subdivided objects using the meta data; and
applying misregistration correction of a printer to the combined object.
